# EUROPEAN PATENT APPLICATION

(11) **EP 3 805 978 A1**
(43) Date of publication of application: **14.04.2021**
(21) Application number: 20200163.2
(22) Date of filing: 05.10.2020
(51) Int. Cl.: G06F 40/40, G06F 40/42, G06F 40/44, G06F 40/45, G06N 3/00

(54) **METHOD AND APPARATUS FOR REORDERING RESULTS OF A TRANSLATION MODEL**

(30) Priority: 08.10.2019 CN 201910947713
(71) Applicant: Beijing Kingsoft Digital Entertainment Co., Ltd., Beijing 100085 (CN)
(72) Inventor: LI, Changliang, BEIJING, 100085 (CN); XU, Zhitao, BEIJING, 100085 (CN); GUO, Xinze, BEIJING, 100085 (CN); TANG, Jianbo, BEIJING, 100085 (CN)
(74) Representative: Opilex

(57) **Abstract**

The application provides a method and apparatus for reordering results of a translation model, and the method includes: translating each of source sentences in a source paragraph by using at least one first translation model to obtain at least one translation sentence corresponding to each of the source sentences; sequentially determining a target source sentence, and an upper adjacent source sentence and a lower adjacent source sentence of the target source sentence according to the sequence of the source sentences in the source paragraph, taking a finally-selected optimal translation sentence corresponding to the upper adjacent source sentence of the target source sentence as a reference optimal translation sentence corresponding to the upper adjacent source sentence, and according to the results of the at least one first translation model, taking an initially-selected optimal translation sentence corresponding to the lower adjacent source sentence of the target source sentence as a reference optimal translation sentence corresponding to the lower adjacent source sentence; stitching at least one target translation sentence corresponding to the target source sentence with the reference optimal translation sentence corresponding to the upper adjacent source sentence of the target source sentence and the reference optimal translation sentence corresponding to the lower adjacent source sentence of the target source sentence respectively, to obtain at least one stitched translation sentence; and obtaining an optimal stitched translation sentence based on the at least one stitched translation sentence, and taking a target translation sentence corresponding to the optimal stitched translation sentence as a finally-selected optimal translation sentence of the target source sentence.

## Description

### Technical Field

The present application relates to a technical field of machine translation, in particular to a method and apparatus for reordering results of a translation model, a computing device, a computer-readable storage medium, and a chip.

### Background

In the field of machine translation, in order to improve the translation accuracy, multiple translation models can be used to translate a source sentence, and the multiple translation sentences obtained can be reordered to obtain an optimal translation sentence.

Currently, there are two methods for reordering the results of the translation model of machine translation sentences:
1) when multiple translation sentences of one or more models are obtained, the translation models or language models are used to directly score all the candidate translation sentences, and then the optimal translation sentence is selected according to the scored scores.
   However, the main problem of this method is that different models have different preferences for different types, so it is difficult to find a model that does not prefer all the data. Therefore, there will be errors in actual situations, and the candidate translation sentences are generally similar in syntax and semantics, and the optimal translation sentence is often the one that is most appropriate to the context.
2) When multiple translation sentences of one or more models are obtained, multiple features are used to represent candidate translation sentences. Common features include scoring of various models (translation model, language model, etc.), alignment scores between candidate translation sentences and source sentences, length ratios of candidate sentences to source sentences, etc. The acquisition of features requires many ready-made models, and it is not possible to directly determine which features have a good effect on reordering, so a selection of features is necessary, which is time-consuming and laborious. Moreover, this method only considers the translation sentences themselves and does not reorder the candidate translation sentences according to the context.

### Summary

In view of this, the embodiment according to this application provides a method and apparatus for reordering results of a translation model, a computing device, a computer-readable, a storage medium, and a chip, so as to solve the technical defects existing in the prior art.

The embodiment according to this application provides a method for reordering results of a translation model, including:
translating each of source sentences in a source paragraph by using at least one first translation model to obtain at least one translation sentence corresponding to each of the source sentences;
sequentially determining a target source sentence, and an upper adjacent source sentence and a lower adjacent source sentence of the target source sentence according to the sequence of the source sentences in the source paragraph, taking a finally-selected optimal translation sentence corresponding to the upper adjacent source sentence of the target source sentence as a reference optimal translation sentence corresponding to the upper adjacent source sentence, and according to the results of the at least one first translation model, taking an initially-selected optimal translation sentence corresponding to the lower adjacent source sentence of the target source sentence as a reference optimal translation sentence corresponding to the lower adjacent source sentence;
stitching at least one target translation sentence corresponding to the target source sentence with the reference optimal translation sentence corresponding to the upper adjacent source sentence of the target source sentence and the reference optimal translation sentence corresponding to the lower adjacent source sentence of the target source sentence respectively, to obtain at least one stitched translation sentence;
obtaining an optimal stitched translation sentence based on the at least one stitched translation sentence, and taking a target translation sentence corresponding to the optimal stitched translation sentence as a finally-selected optimal translation sentence of the target source sentence.

Alternatively, stitching at least one target translation sentence corresponding to the target source sentence with the reference optimal translation sentence corresponding to the upper adjacent source sentence of the target source sentence and the reference optimal translation sentence corresponding to the lower adjacent source sentence of the target source sentence respectively includes:
stitching at least one target translation sentence corresponding to the target source sentence with the reference optimal translation sentence corresponding to the upper adjacent source sentence of the target source sentence and the reference optimal translation sentence corresponding to the lower adjacent source sentence of the target source sentence respectively, according to the sequence of the source sentences.

Alternatively, obtaining the optimal stitched translation sentence based on the at least one stitched translation sentence includes:
stitching the target source sentence with the upper adjacent source sentence and the lower adjacent source sentence to obtain the stitched source sentence corresponding to the target source sentence;
combining the at least one stitched translation sentence with the stitched source sentence respectively to generate at least one parallel corpus pair;
inputting the at least one parallel corpus pair into a second translation model respectively to generate a score for each of the parallel corpus pairs; and
taking the stitched translation sentence corresponding to the parallel corpus pair with the highest score as the optimal stitched translation sentence.
Alternatively, the second translation model includes an encoding layer and a decoding layer;
inputting the at least one parallel corpus pair into the second translation model respectively to generate a score for each of the parallel corpus pairs comprises:
   inputting the stitched source sentence into the encoding layer to generate a corresponding encoding vector;
   generating a corresponding reference decoding vector according to each of the stitched translation sentences; and
   inputting the encoding vector and the reference decoding vector into the decoding layer, to obtain a confidence level of each of the stitched translation sentences and taking the confidence level of each of the stitched translation sentences as the score for each of parallel corpus pairs.

Alternatively, obtaining an optimal stitched translation sentence based on the at least one stitched translation sentence includes:
inputting the at least one stitched translation sentence into a language model respectively, to generate a score corresponding to each of the stitched translation sentences; and
taking the stitched translation sentence with the highest score as the optimal stitched translation sentence.

This application discloses an apparatus for reordering results of a translation model, including:
a translation sentence acquiring module, configured for translating each of source sentences in a source paragraph by using at least one first translation model to obtain at least one translation sentence corresponding to each of the source sentences;
a reference optimal translation sentence determining module, configured for, sequentially determining a target source sentence, and an upper adjacent source sentence and a lower adjacent source sentence of the target source sentence according to the sequence of the source sentences in the source paragraph, taking a finally-selected optimal translation sentence corresponding to the upper adjacent source sentence of the target source sentence as a reference optimal translation sentence corresponding to the upper adj acent source sentence, and according to the results of the at least one first translation model, taking an initially-selected optimal translation sentence corresponding to the lower adjacent source sentence of the target source sentence as a reference optimal translation sentence corresponding to the lower adjacent source sentence;
a stitched translation sentence acquiring module, configured for stitching at least one target translation sentence corresponding to the target source sentence with the reference optimal translation sentence corresponding to the upper adjacent source sentence of the target source sentence and the reference optimal translation sentence corresponding to the lower adjacent source sentence of the target source sentence respectively, to obtain at least one stitched translation sentence; and
a finally-selected optimal translation sentence determining module, configured for obtaining an optimal stitched translation sentence based on the at least one stitched translation sentence, and taking a target translation sentence corresponding to the optimal stitched translation sentence as a finally-selected optimal translation sentence of the target source sentence.

Alternatively, the stitched translation sentence acquiring module is specifically configured for: according to the sequence of the source sentences, stitching at least one target translation sentence corresponding to the target source sentence with the reference optimal translation sentence corresponding to the upper adjacent source sentence of the target source sentence and the reference optimal translation sentence corresponding to the lower adjacent source sentence of the target source sentence respectively.

Alternatively, the finally-selected optimal translation sentence determining module is specifically configured for: stitching the target source sentence with the upper adjacent source sentence and the lower adjacent source sentence to obtain the stitched source sentence corresponding to the target source sentence; combining the at least one stitched translation sentence with the stitched source sentence to generate at least one parallel corpus pair; inputting the at least one parallel corpus pair into a second translation model respectively to generate a score for each of the parallel corpus pairs; and taking the stitched translation sentence corresponding to the parallel corpus pair with the highest score as the optimal stitched translation sentence.

An embodiment according to this application discloses a computing device, including a memory, a processor and computer instructions stored on the memory and capable of running on the processor, wherein the instructions are executed by the processor to implement steps of the method for reordering results of a translation model as described above.

An embodiment according to this application discloses a computer-readable storage medium with computer instructions stored thereon, wherein the instructions are executed by the processor to implement steps of the method for reordering results of a translation model as described above.

This application provides a method and apparatus for reordering results of a translation model. In the process of evaluating the finally-selected optimal translation sentence, the translation sentences output by each of the first translation models are not directly determined, so as to reduce the error caused by the preference of the first translation model. Instead, by stitching at least one target translation sentence corresponding to the target source sentence with the reference optimal translation sentence corresponding to the upper adjacent source sentence and the reference optimal translation sentence corresponding to the lower adjacent source sentence of the source sentence to obtain at least one stitched translation sentence; obtaining an optimal stitched translation sentence based on the at least one stitched translation sentence, and taking the target translation sentence corresponding to the optimal stitched translation sentence as a finally-selected optimal translation sentence of the target source sentence, the adjacent translation sentences of the target translation sentence are considered into the reordering task and in the process of selecting the finally-selected optimal translation sentence, the information of the adjacent reference optimal translation sentence are introduced, which makes the selection of the finally-selected optimal translation sentence more objective and accurate reducing the error caused by the first translation model directly determining the translation sentence, and at the same time, there is no need to train many additional models to generate features for candidate sentences and there is no need to do complex feature engineering, which is simple and efficient.

In addition, in the process of determining the reference optimal translation sentence corresponding to the adjacent source sentence of each of the source sentences according to this embodiment, the finally-selected optimal translation sentence of the upper adjacent source sentence is directly taken as the its reference optimal translation sentence, thereby further ensuring the accuracy of the finally-selected optimal translation sentence.

### Brief Description of the Drawings

Fig. 1 is a schematic structural diagram of a computing device according to an embodiment of this application;
Fig. 2 is a schematic flowchart of a method for reordering the results of a translation model according to an embodiment of this application;
Fig. 3 is a schematic flowchart of a method for reordering the results of a translation model according to an embodiment of this application;
Fig. 4 is a schematic flowchart of a method for reordering the results of a translation model according to an embodiment of this application;
Fig. 5 is a schematic flowchart of a method for reordering the results of a translation model according to another embodiment of this application;
Fig. 6 is a schematic structural diagram of a model for reordering the results of a translation model according to another embodiment of this application;
Fig. 7 is a schematic structural diagram of a device for reordering results of a translation model according to an embodiment of this application.

### Detailed Description

Many specific details are set forth in the following description to facilitate a full understanding of this application. However, the application can be implemented in many other ways different from those described herein, and those skilled in the art can make similar promotion without violating the connotation of the application. Therefore, this application is not limited by the specific implementation disclosed below.

The terms used in one or more embodiments of this description are for the purpose of describing specific embodiments only, and are not intended to limit one or more embodiments of this description. The singular forms of "one", "the" and "said" used in one or more embodiments of the description and the appended claims are also intended to include plural forms, unless the context clearly indicates other meanings. It should also be understood that the term "and / or" as used in one or more embodiments of this description refers to and includes any or all possible combinations of one or more associated listed items.

It should be understood that although the terms first, second, and the like may be used to describe various information in one or more embodiments of this description, such information should not be limited to these terms. These terms are only used to distinguish the same type of information from each other. For example, without departing from the scope of one or more embodiments of this description, the first may also be referred to as the second, and similarly, the second may be referred to as the first. Depending on the context, the word "if" as used here can be interpreted as "while" or "when" or "in response to determination ".

First, the terminology involved in one or more embodiments of the invention is explained.

Upper and lower adjacent sentences: the sentence in front of the current sentence in the paragraph is called as the upper adjacent sentence, and the sentence after the current sentence is called as the lower adjacent sentence. Under normal circumstances, the writing is logical, so there is a logical relationship between the upper and lower adjacent sentences and the current sentence.

Machine translation: by inputting a sentence in a source language into a machine, the machine returns one or more sentences in a target language. This process is called as machine translation.

Reordering: perform reliability sorting on the translation sentences of single or multiple machine translation models is convenient for selecting the optimal sentence from these candidate translation sentences.

In this application, a method and apparatus for reordering results of a translation model, a computing device, a computer-readable storage medium and a chip are provided, which are described in detail in the following embodiments one by one.

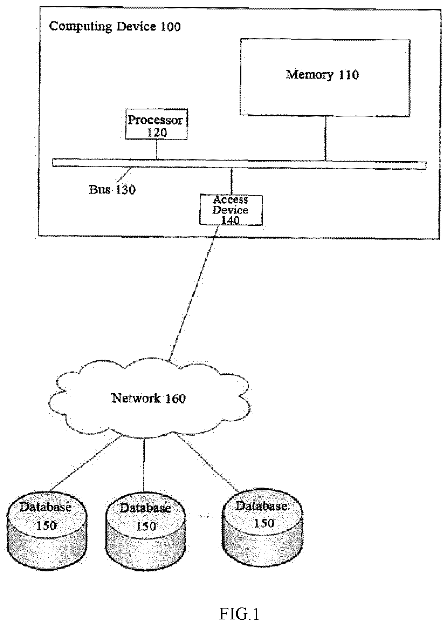

Fig. 1 shows a structural block diagram of a computing device 100 according to an embodiment of the present description. The components of the computing device 100 include, but are not limited to, a memory 110 and a processor 120. The processor 120 is connected with the memory 110 via a bus 130, and a database 150 is used to store data.

The computing device 100 also includes an access device 140 that enables the computing device 100 to communicate via one or more networks 160. Examples of these networks include a public switched telephone network (PSTN), a local area network (LAN), a wide area network (WAN), a personal area network (PAN), or a combination of communication networks such as the Internet. The access device 140 may include any type of wired or wireless network interface (for example, one or more of Network Interface Card (NIC)), such as IEEE802.11 Wireless Local Area Network (WLAN) wireless interface, Worldwide Interoperability for Microwave Access (Wi-MAX) interface, Ethernet interface, Universal Serial Bus (USB) interface, Cellular network interface, Bluetooth interface, Near Field Communication (NFC) interface, etc.

In one embodiment of the present description, the above-mentioned components of the computing device 100 and other components not shown in Fig. 1 may also be connected to each other, for example via the bus. It should be understood that the structural block diagram of the computing device shown in Fig. 1 is for the purpose of example only, and not for the limitation of the scope of this description. Those skilled in the art may add or replace other components as required.

The computing device 100 may be any type of static or mobile computing device, including a mobile computer or mobile computing device (for example, a tablet computer, a personal digital assistant, a laptop computer, a notebook computer, a netbook, etc.), a mobile phone (for example, a smart phone), a wearable computing device (for example, a smart watch, smart glasses, etc.) or other type of mobile device, or static computing device such as a desktop computer or PC. The computing device 100 may also be a mobile or stationary server.

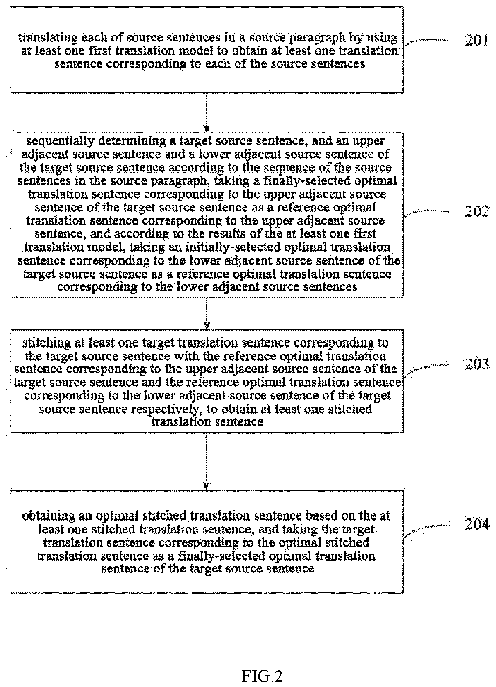

The processor 120 may execute the steps in the method shown in Fig. 2. Fig. 2 shows a schematic flowchart of the method for reordering results of a translation model according to an embodiment of this application, including steps 201 to 204.

Step 201: translating each of source sentences in a source paragraph by using at least one first translation model to obtain at least one translation sentence corresponding to each of the source sentences.

Taking the source paragraph including four source sentences A1, A2, A3, and A4, and the translation model including first translation models B1 and B2 as an example, the first translation model B1 obtains a translated paragraph, including: translation sentence C11 corresponding to the source sentence A1, translation sentence C12 corresponding to the source sentence A2, translation sentence C13 corresponding to the source sentence A3, and translation sentence C14 corresponding to the source sentence A4; the translation model B2 obtains a translated paragraph, including: translation sentence C21 corresponding to the source sentence A1, translation sentence C22 corresponding to the source sentence A2, translation sentence C23 corresponding to the source sentence A3, and translation sentence C24 corresponding to the source sentence A4.

In order to unify the expression and facilitate the understanding, the examples in the following steps of the present embodiment are explained with this example, and the explanations of the following steps will not be made one by one.

Step 202: sequentially determining a target source sentence, and an upper adjacent source sentence and a lower adjacent source sentence of the target source sentence according to the sequence of the source sentences in the source paragraph, taking a finally-selected optimal translation sentence corresponding to the upper adjacent source sentence of the target source sentence as a reference optimal translation sentence corresponding to the upper adjacent source sentence, and according to the results of the at least one first translation model, taking an initially-selected optimal translation sentence corresponding to the lower adjacent source sentence of the target source sentence as a reference optimal translation sentence corresponding to the lower adjacent source sentence.

It should be explained that the adjacent source sentences of the target source sentence include an upper adjacent source sentence and a lower adjacent source sentence. Still taking the source paragraph including four source sentences A1, A2, A3 and A4 as an example. As for source sentence A1, its adjacent sentences include the lower adjacent source sentence A2, while the upper adjacent sentence is empty; as for source sentence A2, its adjacent sentences include the upper adjacent source sentence A1 and the lower adjacent source sentence A3; as for source sentence A3, its adjacent sentences include the upper adj acent source sentence A2 and the lower adjacent source sentence A4; as for source sentence A4, its adjacent sentences include the upper adjacent source sentence A3, while the lower adjacent source sentence is empty.

In this embodiment, the initially-selected optimal translation sentence is a translation sentence obtained by selecting based on the translated result of the first translation model. In the process of translation, the first translation model pays more attention to the word structure and semantic relationship of each of the source sentences, while less attention is paid to the translation sentences corresponding to the adjacent source sentences of each of the source sentences.

In the process of selecting the finally-selected optimal translation sentence, the information of adjacent reference optimal translation sentences is introduced, which makes the selection of the finally-selected optimal translation sentence more objective and accurate, reducing the error caused by the first translation model directly determining the translation sentence. For the specific selection process of the finally-selected optimal translation sentence, please refer to the following steps 203-204.

It should be noted that for any one of the source sentences, the initially-selected optimal translation sentence and the finally-selected optimal translation sentence have been generated at the stage when at least one translation sentence corresponding to each of the source sentences is obtained at step 201. In the process of determining the initially-selected optimal translation sentence and the finally-selected optimal translation sentence, the difference is the method of selecting the translation sentence, rather than regenerating the finally-selected optimal translation sentence in the execution process of the following steps 203-204.

For each source sentence, its initially-selected optimal translation sentence and finally-selected optimal translation sentence may be the same or different.

Still taking the source paragraph including four source sentences A1, A2, A3, and A4 as an example. Table 1 shows the translated results of the four source sentences by the first translation models B1 and B2 and the scores corresponding to the translated results. The higher the score, the better the translation effect.

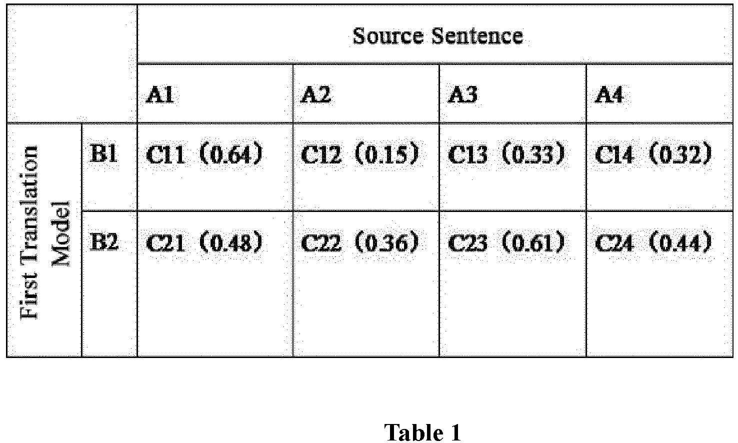

When the source sentence A1 is the source sentence, its adjacent sentences include the lower adjacent source sentence A2, while the upper adjacent sentence is empty. For the source sentence A2, its corresponding translation sentences are C12 and C22, in which the translation score of C22 is higher than that of C12. Therefore, the translation sentence C22 is selected as the initially-selected optimal translation sentence corresponding to source sentence A2. Accordingly, the reference optimal translation sentence corresponding to the lower adjacent source sentence A2 of the source sentence A1 is the initially-selected optimal translation sentence C22 corresponding to source sentence A2. Then, through the following steps 203-204, it is determined that the finally-selected optimal translation sentence for the source sentence A1 is C11.

When the source sentence A2 is the source sentence, its adjacent sentences include the upper adjacent source sentence A1 and the lower adjacent source sentence A3. At this time, the finally-selected optimal translation sentence for the source sentence A1 has been determined, so when the source sentence A2 is taken as the target source sentence, the finally-selected optimal translation sentence C11 is directly taken as the reference optimal translation sentence of the upper adjacent source sentence A1. For the lower adjacent source sentence A3, the translation result of the source sentence A3 by the first translation model is needed to determine the reference optimal translation sentence. Referring to Table 1, the score of the translation sentence C23 is higher than that of the translation sentence C13 for the source sentence A3, and the translation sentence C23 is taken as the reference optimal translation sentence corresponding to the lower adjacent source sentence A3 of source sentence A2. Then, through the following steps 203-204, it is determined that the finally-selected optimal translation sentence for source sentence A2 is C22.

When the source sentence A3 is the source sentence, its adjacent sentences include the upper adjacent source sentence A2 and the lower adjacent source sentence A4. At this time, the finally-selected optimal translation sentence for the source sentence A2 has been determined, so when the source sentence A3 is taken as the target source sentence, the finally-selected optimal translation sentence C22 is directly taken as the reference optimal translation sentence of the upper adjacent source sentence A2. For the lower adjacent source sentence A4, the translated result of the source sentence A4 by the first translation model is needed to determine the reference optimal translation sentence. Referring to Table 1, the score of the translation sentence C24 is higher than that of the translation sentence C14 for the source sentence A4, and the translation sentence C24 is taken as the reference optimal translation sentence corresponding to the lower adjacent source sentence A4 of source sentence A3. Then, through the following steps 203-204, it is determined that the finally-selected optimal translation sentence for source sentence A3 is C13.

When the source sentence A4 is the source sentence, its adjacent sentences include the upper adjacent source sentence A3, while the lower adjacent source sentence is empty. At this time, the finally-selected optimal translation sentence for the source sentence A3 has been determined, so when the source sentence A4 is taken as the target source sentence, the finally-selected optimal translation sentence C13 is directly taken as the reference optimal translation sentence of the upper adjacent source sentence A3.

Step 203: stitching at least one target translation sentence corresponding to the target source sentence with the reference optimal translation sentence corresponding to the upper adjacent source sentence of the target source sentence and the reference optimal translation sentence corresponding to the lower adjacent source sentence of the target source sentence respectively, to obtain at least one stitched translation sentence.

Specifically, step 203 includes: according to the sequence of the source sentences, stitching at least one target translation sentence corresponding to the target source sentence with the reference optimal translation sentence corresponding to the upper adjacent source sentence of the target source sentence and the reference optimal translation sentence corresponding to the lower adjacent source sentence of the target source sentence respectively, to obtain at least one stitched translation sentence.

Still taking the above example as an example, see Table 1. Taking the target source sentence A1 as an example, there are two corresponding target translation sentences C11 and C21. The reference optimal translation sentence corresponding to the lower adjacent source sentence A2 is C22. By stitching the target translation sentences C11 and C21 with the reference optimal translation sentence C22 respectively, the two stitched translation sentences {C11, C22} and {C21, C22} are obtained.

Taking the target source sentence is A2 as an example, there are two corresponding target translation sentences C12 and C22. The reference optimal translation sentence corresponding to the upper adjacent source sentence A1 is C11, and the reference optimal translation sentence corresponding to the lower adjacent source sentence A3 is C23. By stitching the target translation sentences C12 and C22 with the reference optimal translation sentences C11 and C23 respectively, the two stitched translation sentences {C11, C12, C23} and {C11, C22, C23} are obtained.

Similarly, when the target source sentence is A3, two stitched translation sentences {C22, C13, C24} and {C22, C23, C24} are obtained.

Similarly, when the target source sentence is A4, two stitched translation sentences {C13, C14} and {C13, C24} are obtained.

Step 204: obtaining an optimal stitched translation sentence based on the at least one stitched translation sentence, and taking the target translation sentence corresponding to the optimal stitched translation sentence as a finally-selected optimal translation sentence of the target source sentence.

Alternatively, there are various methods for obtaining the optimal stitched translation sentence based on the at least one stitched translation sentence, and this embodiment lists the following two for illustration.

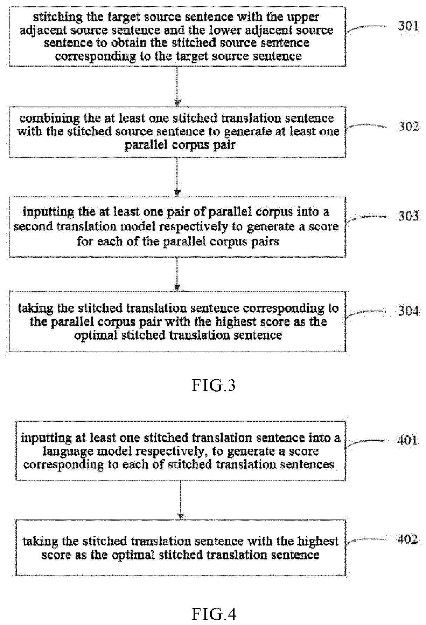

Referring to Fig. 3, obtaining an optimal stitched translation sentence based on the at least one stitched translation sentence in step 204 includes the following steps 301 to 304:
Step 301: stitching the target source sentence with the upper adjacent source sentence and the lower adjacent source sentence to obtain the stitched source sentence corresponding to the target source sentence.

Still taking the above-mentioned source paragraph including four source sentences A1, A2 A3 and A4, and the first translation model including the first translation model B1 and B2 as an example.

Taking the source sentence A2 as the target source sentence as an example, the stitched source sentence {A1, A2, A3} corresponding to the target source sentence A2 is obtained.

Step 302: combining the at least one stitched translation sentence with the stitched source sentence to generate at least one parallel corpus pair.

When the source sentence A2 is the target source sentence, the stitched source sentence {A1, A2, A3} corresponding to the target source sentence A2 is combined with the stitched translation sentences {C11, C12, C13}, {C11, C22, C13} to generate two pairs of parallel corpus {A1, A2, A3 }-{C11, C12, C23 }, {A1, A2, A3 }-{C11, C22, C23 };

Step 303: inputting the at least one parallel corpus pair into the second translation model respectively, to generate a score for each of the parallel corpus pairs.

Among them, the second translation model can be a Convolutional Neural Networks (CNN) model, a Recurrent Neural Networks (RNN) model, or a Transformer translation model.

The CNN model generally includes: an input layer, a convolutional layer, a pooling layer, and a fully connected layer. On the one hand, the connections between neurons of the CNN model are not fully connected; on the other hand, the weights of connections between certain neurons in the same layer are shared (that is, the same). Its non-fully connected and weight-sharing network structure makes it more similar to biological neural network, which reduces the complexity of network model and reduces the number of weights.

The RNN model, also known as recurrent neural network, is a neural network with a feedback structure. Its output is not only related to the current input and the weight of the network, but also to the input of the previous network. The RNN model models time by adding a self-connected hidden layer that span time points; in other words, the feedback of hidden layer not only enters the output terminal, but also enters the hidden layer of the next time.

The architecture of the Transformer translation model includes: an encoder and a decoder. The encoder encodes the source sentence to be translated to generate a vector, and the decoder decodes the vector of the source sentence to generate the corresponding target sentence.

In addition, the second translation model will generate a corresponding loss function loss value according to the input parallel corpus, and then obtains the confidence level of the parallel corpus as the score of the parallel corpus.

There are many kinds of loss functions, such as hinge loss function, exponential loss function or cross-entropy loss function. Since cross-entropy can be used to determine how close the actual output is to the expected output, the cross-entropy loss function is preferred to be used to calculate the loss value in the second translation model of this embodiment, and the loss value obtained by the cross-entropy loss function is used to obtain the confidence level of the parallel corpus as the score of the parallel corpus.

Specifically, in this embodiment, two pairs of parallel corpus {A1, A2, A3}-{C11, C12, C23}, {A1, A2, A3}-{C11, C22, C23} are input into the second translation model respectively, to generate the scores 0.6 and 0.7, for each parallel corpus pair.

Specifically, the second translation model includes an encoding layer and a decoding layer, and step 303 includes:
S3031: inputting the stitched source sentence into the encoding layer to generate a corresponding encoding vector;
S3032: generating a corresponding reference decoding vector according to each of the stitched translation sentences; and
S3033: inputting the encoding vector and the reference decoding vector into the decoding layer, to obtain a confidence level of each of the stitched translation sentences and the confidence level of each of the stitched translation sentences is used as the score of the parallel corpus.

Specifically, the stitched source sentences {A1, A2, A3} are input into the encoding layer to generate a corresponding encoding vector e1. {C11, C12, C23}, {C11, C22, C23} are input into the embedded layer to generate the corresponding reference decoding vectors e2 and e3; the coding vector e1 and the reference decoding vector e2 are input to the decoding layer to obtain a corresponding confidence level which is 0.6, used as the score of the parallel corpus pair; the coding vector e1 and the reference decoding vector e3 are input to the decoding layer to obtain a corresponding confidence level which is 0.7, used as the score of the parallel corpus pair;
Step 304: taking the stitched translation sentence corresponding to the parallel corpus pair with the highest score as the optimal stitched translation sentence.

Since the confidence level of the encoding vector e1 and reference decoding vector e2 obtained in the foregoing steps is 0.6, and the confidence level of encoding vector e1 and reference decoding vector e3 is 0.7, thus {C11, C22, C23} is selected as the optimal stitched translation sentence.

Then, according to the optimal stitched translation sentence {C11, C22, C23}, the finally-selected optimal translation sentence C22 of target source sentence A2 is determined.

Then, when the target source sentence is A3, the finally-selected optimal target translation sentence of the upper adjacent source sentence A2 is directly taken as its reference optimal translation sentence, that is, the reference optimal translation sentence of the upper adjacent source translated A2 is determined to be C22; according to the translated results of the first translation model, the reference optimal translation sentence of the lower adjacent source sentence A4 is determined to be C24. Then repeat the above steps 203-204 to determine the finally-selected optimal translation sentence of the target source sentence A3.

Alternatively, referring to Fig. 4, the optimal stitched translation sentence is obtained based on at least one stitched translation sentence, including the following steps 401-402:
Step 401: inputting at least one stitched translation sentence into a language model respectively, to generate a score corresponding to each of stitched translation sentences.

Among them, language models can include: Markov language model, n-gram language model, Long Short-Term Memory (LSTM) language model, etc.

The Markov language model is a statistical model, which is widely used in various natural language processing application fields, such as speech recognition, automatic part of speech tagging, phonetic word conversion, probabilistic grammar, etc.

The n-gram language model is a statistical language model used to predict the n-th output vector according to the first (n-1) output vectors. At the application level, these vectors can be phonemes (speech recognition applications), characters (input method applications), words (word segmentation applications) or base pairs (genetic information). Generally speaking, n-gram models can be generated from large-scale text or audio corpora.

The LSTM model is a kind of time cycle neural network, which is suitable for processing and predicting important events with relatively long intervals and delays in time series.

In addition, the language model will generate a corresponding loss function loss value according to the input stitched translation sentences, and the confidence level of the parallel corpus obtained through the loss value is used as the score of the stitched translation sentences.

Among them, there are many types of loss functions, such as hinge loss function, exponential loss function or cross-entropy loss function. Since cross-entropy can be used to determine how close the actual output is to the expected output, the cross-entropy loss function is preferred to be used to calculate the loss value in the translation model of this embodiment, and the confidence level of the parallel corpus obtained through the loss value obtained from the cross-entropy loss function is used as the score of the translation sentences.

Step 402: taking the stitched translation sentence with the highest score as the optimal stitched translation sentence.

As described in the previous example, the stitched translation sentences {C11, C12, C23}, {C11, C22, C23} corresponding to the target source sentence A2 are respectively input into the language model, and the scores corresponding to each of the stitched translation sentences are generated as 0.4 and 0.5. The stitched translation sentence {C11, C22, C23} with a score of 0.5 is taken as the optimal stitched translation sentence.

Then, according to the optimal stitched translation sentence {C11, C22, C23}, the finally-selected optimal translation sentence C22 of the target source sentence A2 is determined.

This application provides a method for reordering results of a translation model. In the process of evaluating the finally-selected optimal translation sentence, the translation sentences output by each of the first translation models are not directly determined, so as to reduce the error caused by the preference of the first translation model. Instead, by stitching at least one target translation sentence corresponding to the target source sentence with the reference optimal translation sentence corresponding to the upper adjacent source sentence and the reference optimal translation sentence corresponding to the lower adjacent source sentence of the source sentence to obtain at least one stitched translation sentence, obtaining an optimal stitched translation sentence based on the at least one stitched translation sentence, and taking the target translation sentence corresponding to the optimal stitched translation sentence as a finally-selected optimal translation sentence of the target source sentence, the adjacent translation sentences of the target translation sentence are considered into the reordering task, in the process of selecting the finally-selected optimal translation sentence, the information of the adjacent reference optimal translation sentence are introduced, which makes the selection of the finally-selected optimal translation sentence more obj ective and accurate, reducing the error caused by the first translation model directly determining the translation sentence, and at the same time, there is no need to train many additional models to generate features for candidate sentences, and there is no need to do complex feature engineering, which is simple and efficient.

In addition, in the process of determining the reference optimal translation sentence corresponding to the adjacent source sentence of each of the source sentences in this embodiment, the finally-selected optimal translation sentence of the upper adjacent source sentence is directly used as reference optimal translation sentence of the source sentence, thereby further ensuring the accuracy of the finally-selected optimal translation sentence.

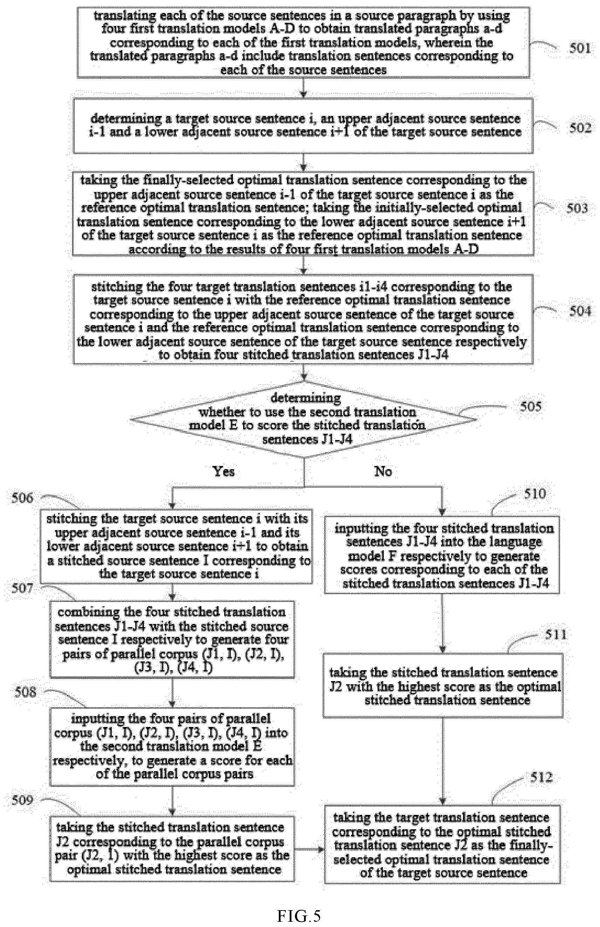

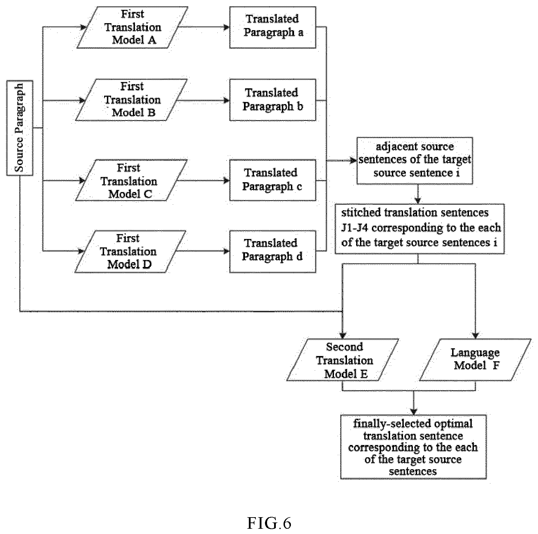

An embodiment of this application discloses a method for reordering results of a translation model. Taking four first translation models as examples see figures 5 and 6, including:
Step 501: translating each of the source sentences in a source paragraph by using four first translation models A-D to obtain translated paragraphs a-d corresponding to each of the first translation models, wherein the translated paragraphs a-d include translation sentences corresponding to each of the source sentences;
Step 502: determining a target source sentence i, and an upper adjacent source sentence i-1 and a lower adjacent source sentence i+1 of the target source sentence;
Step 503: taking the finally-selected optimal translation sentence corresponding to the upper adjacent source sentence i-1 of the target source sentence i as the reference optimal translation sentence; taking the initially-selected optimal translation sentence corresponding to the lower adjacent source sentence i+1 of the target source sentence i as the reference optimal translation sentence according to the results of four first translation models A-D;
Step 504: stitching the four target translation sentences i1-i4 corresponding to the target source sentence i with the reference optimal translation sentence corresponding to the upper adjacent source sentence of the target source sentence i and the reference optimal translation sentence corresponding to the lower adjacent source sentence of the target source sentence respectively to obtain four stitched translation sentences J1-J4 ;

Among them, the four target translation sentences i1-i4 corresponding to the target source sentence i are the target translation sentences obtained by translating the target source sentence i through the first translation model A-D respectively.

For the reference optimal translation sentences corresponding to adjacent source sentences i-1 and i+1 of each of the target source sentence i, please refer to the detailed description in step 503 above;
Step 505: determining whether to use the second translation model E to score the stitched translation sentences J1-J4, and if yes, step 506 is executed, if not, step 510 is executed;
Step 506: stitching the target source sentence i with its upper adjacent source sentence i-1 and its lower adjacent source sentence i+1 to obtain a stitched source sentence I corresponding to the target source sentence I;
Step 507: combining the four stitched translation sentences J1-J4 with the stitched source sentence I respectively to generate four pairs of parallel corpus (J1, I), (J2, 1), (J3, 1), (J4, 1);
Step 508: inputting the four pairs of parallel corpus (J1, I), (J2, I), (J3, I), (J4, I) into the second translation model E respectively, to generate a score for each of the parallel corpus pairs;
Step 509: taking the stitched translation sentence J2 corresponding to the parallel corpus pair (J2, 1) with the highest score as the optimal stitched translation sentence, and step 512 is executed;
Step 510: inputting the four stitched translation sentences J1-J4 into the language model F respectively to generate scores corresponding to each of the stitched translation sentences J1-J4;
Step 511: taking the stitched translation sentence J2 with the highest score as the optimal stitched translation sentence, and step 512 is executed;
Step 512: taking the target translation sentence corresponding to the optimal stitched translation sentence J2 as the finally-selected optimal translation sentence of the target source sentence.

The method for reordering results of a translation model according to this embodiment, in the process of evaluating the finally-selected optimal translation sentence, the translation sentences output by each of the first translation models are not directly determined, so as to reduce the error caused by the preference of the first translation model. Instead, by stitching at least one target translation sentence corresponding to the target source sentence with the reference optimal translation sentence corresponding to the upper adjacent source sentence and the reference optimal translation sentence corresponding to the lower adjacent source sentence of the source sentence to obtain at least one stitched translation sentence, obtaining an optimal stitched translation sentence based on the at least one stitched translation sentence, and taking the target translation sentence corresponding to the optimal stitched translation sentence as a finally-selected optimal translation sentence of the target source sentence, the adjacent translation sentences of the target translation sentence are considered into the reordering task and in the process of selecting the finally-selected optimal translation sentence, the information of the adjacent reference optimal translation sentence are introduced, which makes the selection of the finally-selected optimal translation sentence more obj ective and accurate, reducing the error caused by the first translation model directly determining the translation sentence, and at the same time, there is no need to train many additional models to generate features for candidate sentences, and there is no need to do complex feature engineering. Therefore the method and device is simple and efficient.

Moreover, this embodiment can not only use the second translation model to score the parallel corpus pairs, but also use the language model to score the stitched translation sentences, so as to determine the finally-selected optimal translation sentence of the target source sentence, so as to avoid the singularization of the method of determining the finally-selected optimal translation sentence of the target source sentence.

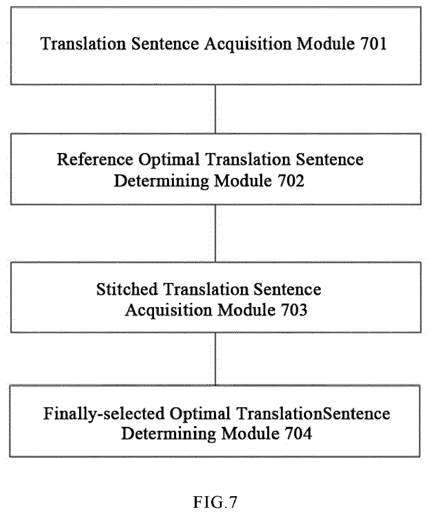

An embodiment of this application also provides an apparatus for reordering results of a translation model, see Fig. 7, including:
a translation sentence acquiring module 701, configured for translating each of source sentences in a source paragraph by using at least one first translation model to obtain at least one translation sentence corresponding to each of the source sentences;
a reference optimal translation sentence determining module 702, configured for sequentially determining a target source sentence, and an upper adjacent source sentence and a lower adjacent source sentence of the target source sentence according to the sequence of the source sentences in the source paragraph, taking a finally-selected optimal translation sentence corresponding to the upper adjacent source sentence of the target source sentence as a reference optimal translation sentence corresponding to the upper adjacent source sentence, and according to the results of the at least one first translation model, taking an initially-selected optimal translation sentence corresponding to the lower adjacent source sentence of the target source sentence as a reference optimal translation sentence corresponding to the lower adjacent source sentence;
a stitched translation sentence acquiring module 703, configured for stitching at least one target translation sentence corresponding to the target source sentence with the reference optimal translation sentence corresponding to the upper adjacent source sentence of the target source sentence and the reference optimal translation sentence corresponding to the lower adjacent source sentence of the target source sentence respectively, to obtain at least one stitched translation sentence; and
a finally-selected optimal translation sentence determining module 704, configured for obtaining an optimal stitched translation sentence based on the at least one stitched translation sentence, and taking a target translation sentence corresponding to the optimal stitched translation sentence as a finally-selected optimal translation sentence of the target source sentence.

Alternatively, the stitched translation sentence acquiring module 703 is specifically configured for: according to the sequence of the source sentences, stitching at least one target translation sentence corresponding to the target source sentence with the reference optimal translation sentence corresponding to the upper adjacent source sentence of the target source sentence and the reference optimal translation sentence corresponding to the lower adjacent source sentence of the target source sentence respectively.

Alternatively, the finally-selected optimal translation sentence determining module 704 is specifically configured for:
stitching the target source sentence with the upper adjacent source sentence and the lower adjacent source sentence to obtain the stitched source sentence corresponding to the target source sentence;
combining the at least one stitched translation sentence with the stitched source sentence to generate at least one parallel corpus pair;
inputting the at least one parallel corpus pair into a second translation model respectively to generate a score for each of the parallel corpus pairs; and
taking the stitched translation sentence corresponding to the parallel corpus pair with the highest score as the optimal stitched translation sentence.

Alternatively, the second translation model includes an encoding layer and a decoding layer, and the finally-selected optimal translation sentence determining module 704 is specifically configured for:
inputting the stitched source sentence into the encoding layer to generate a corresponding encoding vector;
generating a corresponding reference decoding vector according to each of the stitched translation sentences; and
inputting the encoding vector and the reference decoding vector into the decoding layer, to obtain a confidence level of each of the stitched translation sentences and take the confidence level of each of the stitched translation sentences as the score for each of parallel corpus pairs.

Alternatively, the finally-selected optimal translation sentence determining module 704 is specifically configured for:
inputting the at least one stitched translation sentence into a language model respectively, to generate a score corresponding to each of the stitched translation sentences; and
taking the stitched translation sentence with the highest score as the optimal stitched translation sentence.

This application provides an apparatus for reordering results of a translation model, which considers the adjacent translation sentences of the target translation sentence into the reordering task and in the process of selecting the finally-selected optimal translation sentence, introduces the information of the adjacent reference optimal translation sentence, which makes the selection of the finally-selected optimal translation sentence more objective and accurate, reducing the error caused by the first translation model directly determining the translation sentence, and at the same time, there is no need to train many additional models to generate features for candidate sentences, and there is no need to do complex feature engineering, which is simple and efficient.

The above is a schematic solution of an apparatus for reordering results of a translation model according to this embodiment. It should be noted that the technical solution of the apparatus for reordering the results of a translation model belongs to the same concept as the technical solution of the above method for reordering the results of a translation model. For details not described in detail in the technical solution of the apparatus for reordering the results of a translation model, please refer to the description of the technical solution of the method for reordering the results of a translation model.

An embodiment according to this application also provides a computer-readable storage medium, with computer instructions stored thereon, and he instructions are executed by the processor to implement steps of the method for reordering results of a translation model as described above.

The above is a schematic solution of a computer-readable storage medium for reordering results of a translation model according to this embodiment. It should be noted that the technical solution of the storage medium belongs to the same concept as the technical solution of the above method for reordering the results of a translation model. For details not described in detail in the technical solution of the storage medium, please refer to the description of the technical solution of the method for reordering the results of a translation model.

The computer instructions include computer program code, which can be in the form of source code, object code, executable file or some intermediate forms, etc. The computer-readable medium can include any entity or device capable of carrying the computer program code, recording medium, U disk, mobile hard disk, magnetic disk, optical disk, computer memory, Read-Only Memory (ROM), Random Access Memory (RAM), electric carrier signal, telecommunication signal, and software distribution media. It should be noted that the content contained in the computer-readable medium can be appropriately added or deleted in accordance with the requirements of the legislation and patent practice in the jurisdiction. For example, in some jurisdictions, according to the legislation and patent practice, the computer-readable medium does not include electric carrier signal and telecommunication signal.

An embodiment according to this application also provides a chip, which stores computer instructions, and the instructions are executed by the chip to implement steps of the method for reordering results of a translation model as described above.

It should be noted that for the sake of simple description, all the above-mentioned method embodiments are described as a series of action combinations. However, those skilled in the art should know that the application is not limited by the described sequence of actions, because according to the application, some steps can be performed in other sequences or simultaneously. Secondly, those skilled in the art should also know that the embodiments described in the description are preferred embodiments, and the actions and modules involved are not necessarily necessary for the application.

In the above-mentioned embodiments, the description of each embodiment has its own emphasis. For parts that are not detailed in an embodiment, reference may be made to related description of other embodiments.

The preferred embodiments of the application disclosed above are only used to help explain the application. The alternative embodiments do not describe all details in detail, and do not limit the invention to only the specific implementation described. Obviously, many modifications and changes can be made according to the content of this description. The description selects and specifically describes these embodiments in order to better explain the principle and practical application of the application, so that those skilled in the art can understand and use the application well. This application is limited only by the claims and their full scope and equivalents.

## Claims

1. A method for reordering results of a translation model, comprising:
translating each of source sentences in a source paragraph by using at least one first translation model to obtain at least one translation sentence corresponding to each of the source sentences;
sequentially determining a target source sentence, and an upper adjacent source sentence and a lower adjacent source sentence of the target source sentence according to the sequence of the source sentences in the source paragraph, taking a finally-selected optimal translation sentence corresponding to the upper adjacent source sentence of the target source sentence as a reference optimal translation sentence corresponding to the upper adjacent source sentence, and according to the results of the at least one first translation model, taking an initially-selected optimal translation sentence corresponding to the lower adjacent source sentence of the target source sentence as a reference optimal translation sentence corresponding to the lower adjacent source sentence;
stitching at least one target translation sentence corresponding to the target source sentence with the reference optimal translation sentence corresponding to the upper adjacent source sentence of the target source sentence and the reference optimal translation sentence corresponding to the lower adjacent source sentence of the target source sentence respectively, to obtain at least one stitched translation sentence;
obtaining an optimal stitched translation sentence based on the at least one stitched translation sentence, and taking a target translation sentence corresponding to the optimal stitched translation sentence as a finally-selected optimal translation sentence of the target source sentence.

2. The method for reordering results of a translation model according to claim 1, wherein, stitching at least one target translation sentence corresponding to the target source sentence with the reference optimal translation sentence corresponding to the upper adjacent source sentence of the target source sentence and the reference optimal translation sentence corresponding to the lower adjacent source sentence of the target source sentence respectively, comprises:
stitching at least one target translation sentence corresponding to the target source sentence with the reference optimal translation sentence corresponding to the upper adjacent source sentence of the target source sentence and the reference optimal translation sentence corresponding to the lower adjacent source sentence of the target source sentence respectively, according to the sequence of the source sentences.

3. The method for reordering results of a translation model according to claim 1, wherein, obtaining an optimal stitched translation sentence based on the at least one stitched translation sentence comprises:
stitching the target source sentence with the upper adjacent source sentence and the lower adjacent source sentence to obtain the stitched source sentence corresponding to the target source sentence;
combining the at least one stitched translation sentence with the stitched source sentence respectively to generate at least one parallel corpus pair;
inputting the at least one parallel corpus pair into a second translation model respectively to generate a score for each of the parallel corpus pairs; and
taking the stitched translation sentence corresponding to the parallel corpus pair with the highest score as the optimal stitched translation sentence.

4. The method for reordering results of a translation model according to claim 3, wherein, the second translation model comprises an encoding layer and a decoding layer;
inputting the at least one parallel corpus pair into the second translation model respectively to generate a score for each of the parallel corpus pairs comprises:
inputting the stitched source sentence into the encoding layer to generate a corresponding encoding vector;
generating a corresponding reference decoding vector according to each of the stitched translation sentences; and
inputting the encoding vector and the reference decoding vector into the decoding layer, to obtain a confidence level of each of the stitched translation sentences and taking the confidence level of each of the stitched translation sentences as the score for each of parallel corpus pairs.

5. The method for reordering results of a translation model according to claim 1, wherein, obtaining an optimal stitched translation sentence based on the at least one stitched translation sentence comprises:
inputting the at least one stitched translation sentence into a language model respectively, to generate a score corresponding to each of the stitched translation sentences; and
taking the stitched translation sentence with the highest score as the optimal stitched translation sentence.

6. An apparatus for reordering results of a translation model, comprising:
a translation sentence acquiring module, configured for translating each of source sentences in a source paragraph by using at least one first translation model to obtain at least one translation sentence corresponding to each of the source sentences;
a reference optimal translation sentence determining module, configured for, sequentially determining a target source sentence, and an upper adjacent source sentence and a lower adjacent source sentence of the target source sentence according to the sequence of the source sentences in the source paragraph, taking a finally-selected optimal translation sentence corresponding to the upper adjacent source sentence of the target source sentence as a reference optimal translation sentence corresponding to the upper adjacent source sentence, and according to the results of the at least one first translation model, taking an initially-selected optimal translation sentence corresponding to the lower adjacent source sentence of the target source sentence as a reference optimal translation sentence corresponding to the lower adjacent source sentence;
a stitched translation sentence acquiring module, configured for stitching at least one target translation sentence corresponding to the target source sentence with the reference optimal translation sentence corresponding to the upper adjacent source sentence of the target source sentence and the reference optimal translation sentence corresponding to the lower adjacent source sentence of the target source sentence respectively, to obtain at least one stitched translation sentence; and
a finally-selected optimal translation sentence determining module, configured for obtaining an optimal stitched translation sentence based on the at least one stitched translation sentence, and taking a target translation sentence corresponding to the optimal stitched translation sentence as a finally-selected optimal translation sentence of the target source sentence.

7. The apparatus for reordering results of a translation model according to claim 6, wherein, the stitched translation sentence acquiring module is specifically configured for: according to the sequence of the source sentences, stitching at least one target translation sentence corresponding to the target source sentence with the reference optimal translation sentence corresponding to the upper adjacent source sentence of the target source sentence and the reference optimal translation sentence corresponding to the lower adjacent source sentence of the target source sentence respectively.

8. The apparatus for reordering results of a translation model according to claim 6, wherein, the finally-selected optimal translation sentence determining module is specifically configured for:
stitching the target source sentence with the upper adjacent source sentence and the lower adjacent source sentence to obtain the stitched source sentence corresponding to the target source sentence;
combining the at least one stitched translation sentence with the stitched source sentence to generate at least one parallel corpus pair;
inputting the at least one parallel corpus pair into a second translation model respectively to generate a score for each of the parallel corpus pairs; and
taking the stitched translation sentence corresponding to the parallel corpus pair with the highest score as the optimal stitched translation sentence.

9. A computing device, comprising a memory, a processor and computer instructions stored on the memory and capable of running on the processor, wherein the instructions are executed by the processor to implement steps of the method for reordering results of a translation model according to any one of claims 1-5.

10. A computer-readable storage medium with computer instructions stored thereon, wherein the instructions are executed by the processor to implement steps of the method for reordering results of a translation model according to any one of claims 1-5.
